## Europäisches Patentamt
## European Patent Office
## Office européen des brevets

(19)

(11) Numéro de publication: **0 230 432**
**B1**

(12)
# FASCICULE DE BREVET EUROPEEN

(45) Date de publication du fascicule du brevet:
**18.10.89**

(51) Int. Cl.⁴: **C 01 C 1/18**

(21) Numéro de dépôt: **86903437.1**

(22) Date de dépôt: **19.06.86**

(86) Numéro de dépôt international:
**PCT/FR 86/00212**

(87) Numéro de publication internationale:
**WO 87/00159 (15.01.87 Gazette 87/1)**

(54) **PROCEDE DE FABRICATION DE SOLUTIONS CONCENTREES DE NITRATE D'AMMONIUM.**

(30) Priorité: **04.07.85 FR 8510217**

(43) Date de publication de la demande:
**05.08.87 Bulletin 87/32**

(45) Mention de la délivrance du brevet:
**18.10.89 Bulletin 89/42**

(84) Etats contractants désignés:
**AT BE CH DE FR GB IT LI LU NL SE**

(56) Documents cités:
**EP-A- 0 116 529**
**FR-A- 813 196**
**FR-A- 1 029 010**
**FR-A- 1 093 912**
**FR-A- 1 356 054**
**GB-A- 1 105 466**

Le dossier contient des informations techniques présentées postérieurement au dépôt de la demande et ne figurant pas dans le présent fascicule.

(73) Titulaire: **Société Chimique des Charbonnages S.A., Tour Aurore Place des Reflets, F-92080 Paris La Défense 2 Cédex 5 (FR)**

(72) Inventeur: **VILLARD, Alexandre, 222, rue St. Julien, F-76100 Rouen (FR)**
Inventeur: **COTONEA, Yves, 83, rue Thomas Dubose, F-76000 Rouen (FR)**

(74) Mandataire: **Fourquet, Antoinette, SOCIETE CHIMIQUE DES CHARBONNAGES S.A. Service Propriété Industrielle B.P. No. 57, F-62670 Mazingarbe (FR)**

## Description

La présente invention concerne un procédé de fabrication de solutions aqueuses concentrées de nitrate d'ammonium par neutralisation d'acide nitrique par de l'ammoniac.

La présente invention concerne un procédé de fabrication de solutions concentrées de nitrate d'ammonium caractérisé par le fait que la neutralisation est effectuée dans un réacteur tubulaire.

Le réacteur tubulaire consiste en une simple section de tube de relativement faible diamètre sans garnissage interne. Ce type de réacteur a été réalisé pour la fabrication de phosphate d'ammonium par neutralisation d'acide phoshorique par l'ammoniac. La réaction se produit quasi instantanément avec vaporisation de l'eau contenue dans l'acide phosphorique. L'emploi des réacteurs tubulaires pour la fabrication de phosphates d'ammonium a été décrit par exemple dans les brevets suivants: FR-B-1 426 746, US-A-2 618 547, US-A-2 755 176, US-A-2 902 342, US-A-2 977 201, US-A-3 310 371, US-A-3 362 809, US-A-3 399 031, US-A-3 419 378, US-A-3 464 808, US-A-3 482 945, US-A-3 503 706. Le réacteur tubulaire utilisé est horizontal ou faiblement incliné par rapport à l'horizontale. Les réacteurs tubulaires généralement utilisés ont un diamètre compris entre 200 et 10 mm pour une longueur de 1,50 à 10 m. Le rapport longueur/diamètre n'est en général pas inférieur à 50.

Selon la présente invention la réaction est faite avec ou sans recyclage de la solution concentrée de nitrate d'ammonium en fonction du débit global réactifs. En effet lorsque le débit global de réactifs correspond à une production inférieure à 150 kg/h/cm², la réaction conduit à la formation d'un aérosol de gouttelettes ou de microparticules solides créant un nuage important de fumée duquel il est très difficile, si ce n'est impossible, de séparer le produit désiré. La demanderesse a decouvert que dans ce cas si l'on injecte l'acide nitrique concentré en présence d'ammoniac et d'un milieu constitué par un courant de recyclage de la solution concentrée de nitrate d'ammonium on obtient, à la sortie de ce réacteur tubulaire, un mélange de vapeur d'eau et de gouttelettes de solutions de nitrate d'ammonium facilement séparable. L'acide nitrique est injecté en présence d'un débit massique de solution de nitrate d'ammonium avantageusement compris entre 1 et 5 fois le débit massique global des réactifs. Le taux de recyclage est d'autant plus élevé que le débit global est plus faible. Il est connu de faire réagir de l'acide nitrique concentré et de l'ammoniac au sein d'un grand volume de solution aqueuse de nitrate d'ammonium. Les réactifs sont injectés dans un appareil comportant deux enceintes séparées reliées par un ou plusieur tubes verticaux. Les réactifs sont injectés à la base de l'enceinte inférieure. L'exothermicité de la réaction conduit à la vaporisation de l'eau contenue dans l'acide nitrique concentré et l'ébullition du milieu réactionnel a lieu dans la seconde enceinte surmontant la première et communiquant avec la première par des tubes verticaux. Un phénomène de thermosiphon permet de faire s'élever le produit dans un certain nombre de tubes verticaux et de redescendre par d'autres tubes. Dans ce type d'appareil le taux de recyclage (défini comme le rapport en poids de la solution de nitrate d'ammonium recyclé à la solution de nitrate d'ammonium produit est de l'ordre de 100/1). Ce type de réacteur conduit à des installations encombrantes qui contiennent un volume important d'un produit relativement dangereux maintenu à une température élevée (140-160°C).

Lorsque le débit global est tel que la production soit supérieure à 150 kg/h/cm², il n'est plus nécessaire de recycler du nitrate d'ammonium. Il ne se produit pas de fumées en cours de fonctionnement. Il faut cependant noter qu'il est avantageux d'introduire au moment du démarrage de l'installation une certaine quantité de solution de nitrate d'ammonium. En effet au moment du démarrage de l'installation l'ouverture des vannes n'est pas instantanée et demande plusieurs dizaines de secondes pendant lesquelles des fumées sont produites en abondance. De plus il est préférable de prévoir un dispositif de recyclage des solutions de nitrate d'ammonium pour pouvoir modifier selon les besoin le débit global des réactifs.

Le procédé de la présente demande peut être mis en oeuvre dans l'installation suivante. Cette dernière est essentiellement caractérisée par le fait qu'elle comprend au moins un réacteur tubulaire muni de ses admissions de réactifs (HNO₃-HN₃), au moins une unité pour séparer le produit résultant de la réaction (solution aqueuse concentrée de nitrate d'ammonium) et la vapeur d'eau et éventuellement d'un circuit de recyclage du produit vers le réacteur tubulaire, celui-ci étant muni dans ce cas d'une admission correspondante.

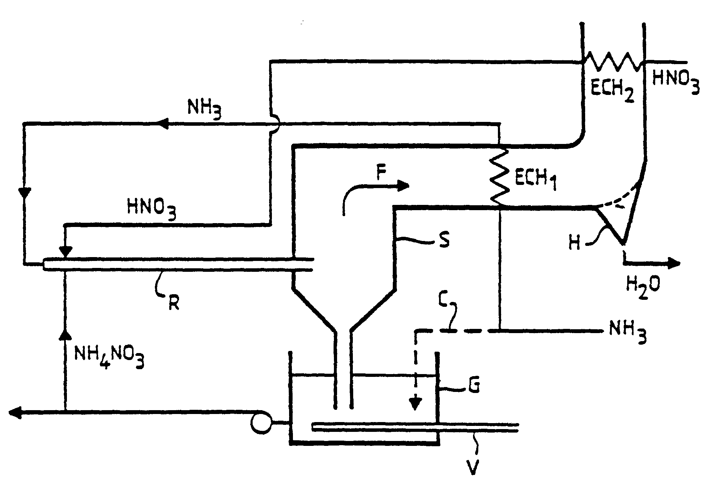

D'autres caractéristiques et avantages de l'invention ressortiront plus clairement de la description qui va suivre faite en regard de la figure schématique annexée.

En se référant à cette figure, le réacteur tubulaire (R) comporte à l'une de ses extrémités trois arrivées de réactifs destinées à admettre de préférence selon un régime turbulant NH₃, HNO₃ et NH₄NO₃ de recyclage. A l'autre extrémité du réacteur on soutire des solutions concentrées de nitrate d'ammonium en mélange avec la vapeur d'eau et on l'introduit dans le séparateur (S). A la base du séparateur (S), on soutire et stocke les solutions concentrées de nitrate d'ammonium obtenues, une partie de ce produit étant éventuellement recyclée, le cas échéant, après neutralisation par addition de NH₃ par la conduite (C). Ce bac de stockage (G) peut comporter en son sein un «moyen de chauffage» (V) dans le but de maintenir le produit à l'état liquide en cas d'arrêt de l'installation. De préférence les solutions de nitrate d'ammonium obtenues sont soutirées à une température comprise entre 120 et 160°C.

En tête du séparateur (S) est entraînée la vapeur d'eau suivant la flèche F, l'eau de condensation est soutirée en H comme représenté sur le dessin.

Les échangeurs de chaleur (ECH₁, ECH₂) ont pour but de préchauffer NH₃ et HNO₃ avant leur admission dans le réacteur (R).

La quantité de NH₃ qui est ajoutée dans le bac de stockage (G) en vue de la neutralisation correspond au degré d'acidité du produit résultant, degré d'acidité lui-même fonction de la quantité de $HNO_3$ admise au départ. L'excès de $HNO_3$ nécessaire pour maintenir acide le produit sortant du réacteur a pour but d'éviter des pertes excessives en ammoniac $NH_3$ introduit dans le réacteur (R).

Les avantages résultant du procédé selon l'invention sont, entre autres:

— un faible investissement pour la réalisation du réacteur en raison de sa simplicité et de son petit diamètre,

— une inertie très faible de l'installation en raison du petit volume de solutions concentrées de nitrate d'ammonium en circulation dans l'installation,

— une réduction des risques dûs à la décomposition du nitrate acide par suite du faible volume mis en jeu.

Les exemples suivants sont donnés à titre illustratif et nullement limitatif de la présente invention.

### Exemple 1 (comparatif)

Dans un réacteur tubulaire de diamètre 15 mm, on injecte:

— 157 l/h d'acide nitrique à 57,5%, température 20°C,

— 33,5 kg/h d'ammoniac gazeux à 25°C.

On obtient un brouillard dense qui oblige à arrêter l'essai au bout de quelques minutes. Les pertes en nitrate d'ammonium, parti en fumées, sont estimées à 40%.

### Exemple 2

Dans une installation telle que représentée à la figure annexée avec le même réacteur tubulaire on injecte:

— 218,4 l/h d'acide nitrique à 57,5% à 20°C,

— 46 kg/h d'ammoniac gazeux à 60°C,

— 1000 kg/h de solutions concentrées de nitrate d'ammonium recyclé à 150°C et 92% de concentration.

On produit, selon un débit de 1230 kg/h, une solution de nitrate d'ammonium très légèrement alcaline à une température de 140°C avec une concentration de 91,2%. Les pertes totales en azote représentent 5,8% de la quantité totale mise en oeuvre sous sorme d'acide nitrique et d'ammoniac.

### Exemple 3

Dans la même installation que celle de l'exemple 2 on introduit:

— 373, l/h d'acide nitrique à 57,5% à 20°C,

— 76,8 kg/h d'ammoniac gazeux à 80°C,

— 700 kg/h de solutions de nitrate d'ammonium recyclées à 150°C et 92% de concentration dans lequel on introduit par la conduite (C) 1,2 kg de $NH_3$.

On produit selon un débit de 1120 kg/h, une liqueur à 155°C avec une concentration de 92,4%.

Les pertes totales en azote représentent 0,15% de la quantité totale mise en oeuvre sous forme d'acide nitrique et d'ammoniac.

### Exemple 4

Dans la même installation que celle de l'exemple 2 on introduit:

— 480 l/h d'acide nitrique à 57,5% réchauffé à 45°C

— 97,5 kg/h d'ammoniac à 58°C.

On produit, selon un débit de 518 kg/h, une solution de nitrate d'ammonium faiblement acide (acidité libre 5 g $HNO_3$ par litre de solution) ayant une concentration de 88,3% et une température de 148°C.

Les pertes totales en azote représentent 0,6% de la quantité totale mise en oeuvre sous forme d'acide nitrique et d'ammoniac.

## Revendications

1. Procédé de fabrication de solutions aqueuses concentrées de nitrate d'ammonium par neutralisation d'acide nitrique par de l'ammoniac dans lequel la neutralisation se fait dans un réacteur tubulaire caractérisé en ce que, lorsque le débit global de réactifs est inférieur à 150 kg/h/cm² de section de réaction tubulaire, l'on effectue la réaction en présence d'un milieu constitué par un courant de recyclage de la solution concentrée de nitrate d'ammonium avec un taux de recydlage compris entre 1 et 5 et en ce, que lorsque le débit global de réactifs est supérieur à 150 kg/h/cm² de section de réacteur tubulaire, l'on effectue la neutralisation sans recyclage.

2. Procédé selon la revendication 1 caractérisé par le fait que l'on utilise une installation comprenant essentiellement au moins un réacteur tubulaire (R), horizontal ou faiblement incliné et présentant un rapport longueur-diamètre supérieur ou égal à 50, muni de ses admissions de réactifs ($HNO_3$-$NH_3$), au moins une unité (S) pour séparer le produit (solution aqueuse concentrée de nitrate d'ammonium) résultant de la réaction et la vapeur d'eau, et au moins un circuit de recyclage du produit vers le réacteur tubulaire, celui-ci étant muni d'une admission correspondante.

## Patentansprüche

1. Verfahren zur Herstellung von konzentrierten wässrigen Lösungen von Ammoniumnitrat durch Neutralisation von Salpetersäure durch Ammoniak, bei welchem die Neutralisation in einem rohrförmigen Reaktor erfolgt, dadurch gekennzeichnet, daß man, wenn der Gesamtdurchsatz der Reaktionsteilnehmer geringer als 150 kg/h/cm² des Querschnitts des rohrförmigen Reaktors ist, die Reaktion in Gegenwart eines Milieus durchführt, das von einem Rückführungsstrom der konzentrierten Ammoniumnitratlösung bei einem Rückführungsverhältnis zwischen 1 und 5 gebildet ist, und daß man, wenn der Gesamtdurchsatz der Reaktionsteilnehmer größer als 150 kg/h/cm² des Querschnitts des rohrförmigen Reaktors ist, die Neutralisation ohne Rückführung durchführt.

2. Verfahren nach Anspruch 1, dadurch gekennzeichnet, daß man eine Anlage verwendet, die im wesentlichen mindestens einen horizontalen oder leicht geneigten rohrförmigen Reaktor, der ein Längen/Durchmesser-Verhältnis von 50 oder mehr aufweist und mit Einlässen für die Reaktionsteilnehmer

(HNO₃-NH₃) versehen ist, mindestens eine Einheit (S) zum Trennen des aus der Reaktion resultierenden Produkts (konzentrierte wässrige Ammoniumnitratlösung) und des Wasserdampfes und mindestens eine Leitung zur Rückführung des Produktes zum rohrförmigen Reaktor umfaßt, wobei letztere mit einem entsprechenden Einlaß versehen ist.

## Claims

1. Process for the manufacture of concentrated aqueous solutions of ammonium nitrate by neutralization of nitric acid with ammonia in which the neutralization is carried out in a tubular reactor, characterized in that, when the total flow rate of reactants is below 150 kg/h/cm² of tubular reaction crosssection, the reaction is performed in the presence of a medium consisting of a recycling stream of the concentrated solution of ammonium nitrate with a recycling ratio of between 1 and 5 and in that, when the total flow rate of reactants is above 150 kg/h/cm² of tubular reactor cross-section, the neutralization is performed without recycling.

2. Process according to Claim 1, characterized in that a plant is employed, comprising essentially at least one horizontal or slightly inclined tubular reactor (R) with a length/diameter ratio greater than or equal to 50, equipped with its reactant (HNO₃-NH₃) entries, at least one unit (S) for separating the product (concentrated aqueous solution of ammonium nitrate) resulting from the reaction and steam, and at least one circuit for recycling the product towards the tubular reactor, the latter being equipped with a corresponding entry.